# EUROPÄISCHE PATENTSCHRIFT

(11) **EP 1 669 596 B1**
(45) Veröffentlichungstag und Bekanntmachung des Hinweises auf die Patenterteilung: **13.01.2010**
(21) Anmeldenummer: 05023831.0
(22) Anmeldetag: 02.11.2005
(51) Int. Cl.: F03D 1/06, F03D 11/00

(54) **Vorrichtung zur Belüftung einer Rotornabe einer Windenergieanlage**
Ventilating device for the rotor hub of a wind generator
Dispositif de ventilation pour le moyeu de rotor d'une éolienne

(30) Priorität: 07.12.2004 DE 102004058776
(43) Veröffentlichungstag der Anmeldung: 14.06.2006
(73) Patentinhaber: NORDEX Energy GmbH, 22848 Norderstedt (DE)
(72) Erfinder: Jannasch, Henrik, 18059 Rostock (DE); Kroh, Uwe, 18059 Rostock (DE)
(74) Vertreter: Hauck Patent- und Rechtsanwälte

(56) Entgegenhaltungen:
- EP-A- 1 375 913
- JP-A- 58 065 977
- US-A1- 2004 160 063

## Beschreibung

Die vorliegende Erfindung betrifft eine Vorrichtung zur Belüftung einer Rotomabe einer Windenergieanlage.

Bei modernen Windenergieanlagen wird die vom Rotor aus dem Wind aufgenommene Leistung durch den Einstellwinkel (Pitchwinkel) der Rotorblätter begrenzt und häufig in ihrem Wert geregelt. Die dazu erforderlichen Einrichtungen zur Veränderung des Pitchwinkels, also insbesondere Stellmotoren, Steuerung, Energiespeicher usw., befinden sich oft in der Nabe. Diese Einrichtungen, ebenso wie andere Komponenten in der Nabe müssen so gut wie möglich vor negativen Umwelteinflüssen geschützt werden.

Abhängig von Umgebungs- und Betriebsbedingungen, beispielsweise beim Betrieb in sehr heißen Gebieten, ist eine verstärkte Kühlung bestimmter Bauteile des Pitchsystems erforderlich, insbesondere auch bei einer starken Beanspruchung.

Aus Patent Abstracs of Japan 58065977 A ist bekannt, eine Auslassöffnung an der Außenseite der Gondel im Bereich vom Übergang von Gondel zu Rotomabe vorzusehen. Die Auslassöffnung besitzt einen u-förmig abgewinkelten Einlasskanal.

Eine Windenergieanlage mit einer Belüftungseinrichtung für eine Rotornabe ist aus Dokument US 2004/0160063 bekannt.

Der Erfindung liegt die Aufgabe zugrunde, eine Belüftungseinrichtung einer Rotomabe bei einer Windenergieanlage bereitzustellen, die einerseits eine ausreichende Belüftung sicherstellt und andererseits das Eindringen von Wasser, Staub und dergleichen verhindert.

Erfindungsgemäß wird die Aufgabe durch eine Windenergieanlage mit den Merkmalen aus Anspruch 1 gelöst. Vorteilhafte Ausgestaltungen bilden den Gegenstand der Unteransprüche.

Die erfindungsgemäße Aufgabe wird durch eine Windenergieanlage mit einer Belüftungseinrichtung der Rotomabe gelöst, wobei die Belüftung ein napfförmiges Element und einen rohrförmigen Stutzen aufweist. Das napfförmige Element besitzt einen Grund und eine umlaufende Seitenwand. Der rohrförmige Stutzen führt in einen Innenraum der Rotornabe. Das napfförmige Element ist derart vor einer Eintrittsöffnung des Stutzens gehalten, dass die Eintrittsöffnung seitlich durch die Seitenwand abgeschirmt ist. Hierdurch wird erreicht, dass der eintretende Luftstrom an der Seitenwand des napfförmigen Elements vorbei in dessen Innenraum eintreten muss und von hier unter Umkehr seiner Bewegungsrichtung in den Innenraum der Rotomabe gelangt. Die mehrmalige Umkehr der Bewegungsrichtung stellt sicher, dass nicht etwaige mitgeführte Partikel oder Flüssigkeit in den Innenraum der Rotomabe gelangt. Bevorzugt ist der Stutzen im wesentlichen auf der Rotationsachse der Nabe angeordnet. Hierdurch wird einerseits sichergestellt, dass der durch den Stutzen eintretende Luftstrom direkt auf die Nabe gelenkt wird. Andererseits stellt diese Positionierung auch sicher, dass ein sich vor der Rotomabe bildender Staudruck die anströmende Luft über das napfförmige Element, in dieses hinein und von dort über den Stutzen mit einem ausreichenden Druck in die Rotornabe lenkt. Ebenfalls erlaubt die erfindungsgemäße Belüftungseinrichtung einen Druckausgleich in dem Flügel während des Turmdurchgangs bei der Drehung der Rotorblätter. Hierdurch kann der bei den Flügeln auftretende Pumpeneffekt ausgeglichen und die Beanspruchung des Flügelmaterial weiter reduziert werden.

Bevorzugterweise vergrößert sich der Querschnitt der Eintrittsöffnung in den Stutzen, hierzu ist die Wand des Stutzens nach außen geneigt. Gerade in dem Fall, in dem der Stutzen in der Verlängerung der Rotationsachse angeordnet ist, rotiert die Wand des Stutzens um dessen Längsachse. Eintretende Flüssigkeit oder Partikel werden bei einer nach außen geneigten Wand durch die Zentrifugalkraft von der Eintrittsöffnung fortbewegt.

In einer bevorzugten Ausgestaltung besitzt das napfförmige Element einen Innendurchmesser, der größer als der Außendurchmesser des Stutzens ist. Wenn das napfförmige Element und der Stutzen rotationssymmetrisch ausgebildet sind, können diese mit ihrer Symmetrieachse auf der Rotationsachse der Rotornabe angeordnet werden, so dass diese sich beim Betrieb der Windenergieanlage ebenfalls um deren Rotationsachse drehen.

In einer bevorzugten Weiterbildung ist ein Wandelement vorgesehen, das eine Vertiefung mit einer zentralen Öffnung besitzt, auf die der Stutzen aufgesetzt ist oder durch die der Stutzen hindurch reicht. Je nach Anforderung der Belüftung kann der Stutzen lediglich auf die Öffnung des Wandelements aufgesetzt sein oder durch das Wandelement hindurch reichen, um den Luftstrom tiefer in die Rotomabe zu leiten.

In einer möglichen Ausgestaltung ist das Wandelement außerhalb der Vertiefung eben ausgebildet. Bei dieser Ausgestaltung liegt der Grund des napfförmigen Elements bevorzugt in einer Höhe mit dem Wandelement. Das in der Vertiefung des Wandelements gehaltene napfförmige Element bildet mit seinem Grund bei dieser Ausgestaltung im wesentlichen eine Ebene mit dem Wandelement.

Bevorzugt ist das Wandelement über mindestens einen Arm an einem Rahmen schwenkbar angelenkt. Der Arm bildet bevorzugt eine Luke, die durch das schwenkbare Wandelement verschlossen werden kann. Hierzu sind bevorzugt Befestigungsmittel an dem Rahmen und/oder an dem Wandelement vorgesehen, um die zentrale Luke zu verschließen.

In einer alternativen Ausgestaltung ist der Rand des Wandelements entlang einer umlaufenden Knicklinie abgebogen. Bei dieser Ausgestaltung ist der Rand des Wandelements beabstandet von einer Ummantelung der Rotornabe angeordnet, so dass ein Austrittskanal für die Luft aus dem Inneren der Rotomabe gebildet ist. Für diese Ausgestaltung reicht der Stutzen über das Wandelement hinaus in den Innenraum der Rotornabe hinein, um die Luft in den Innenraum der Rotornabe zu fördern. Zusätzlich kann an das Ende des Stutzens ein elastischer Schlauch angesetzt sein, über den Luft tiefer ins Innere der Rotornabe gelangt.

Zwei bevorzugte Ausfiihrungsbeispiele werden anhand der nachfolgenden Figuren näher beschrieben. Es zeigt:
- Fig. 1: eine schematische Querschnittsansicht einer Rotornabe mit Ummantelung,
- Fig. 2: eine Prinzipdarstellung des Lufteintritts,
- Fig. 3: zeigt die Neigung des Stutzens gegenüber der Horizontalen,
- Fig. 4: eine perspektivische Ansicht einer Einstiegsluke mit Lüftungsöffnung von außen,
- Fig. 5: perspektivische Ansicht der Einstiegsluke mit Lüftungsöffnung von innen und
- Fig. 6: Querschnitt durch die Einstiegsluke mit Lüftungsöffnung.

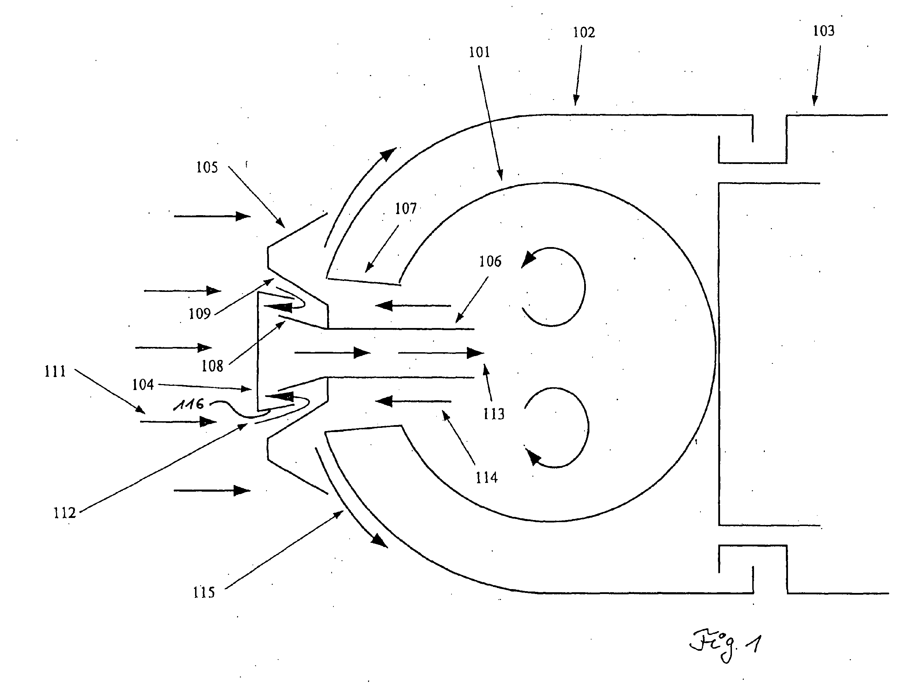

Fig. 1 zeigt in einer schematischen Ansicht eine Rotomabe 101, die mit einer Ummantelung 102 umgeben ist. Die Ummantelung wird nachfolgend als Spinner bezeichnet. Rotomabe 101 und Spinner 102 drehen sich relativ zu der Gondel 103.

Die Belüftung der Nabe erfolgt von der Vorderseite, das heißt also von der Richtung, aus der die Luft anströmt. Die Belüftung besitzt einen napfförmigen Abschluss 104, der vor einer Eintrittsöffnung in den Stutzen 108 angeordnet ist. Der Stutzen 108 ragt durch ein Bodenelement 105 in das Innere der Rotornabe.

Die vor der Rotomabe angestaute Luftmasse, angedeutet durch Strömungspfeil 111, tritt entlang dem Strömungskanal 112 in den Aufsatz 104 ein und strömt von hier aus weiter über den Luftkanal 106 in das Innere der Rotomabe 101, wie durch die Luftströmung 113 angedeutet. Im Inneren der Rotomabe verwirbelt die Luftströmung und tritt anschließend wie durch den Strömungspfeil 114 angedeutet durch einen weiteren Luftkanal 107 zwischen Wandelement 105 und Spinner 102 wieder aus, vgl. Luftströmung 115. Unterstützt wird dieser Effekt durch die an der Nabe vorbei strömende Luft, die im Bereich der Austrittsöffnung für die Luftströmung 115 eine Sogwirkung entfaltet und den Luftdurchsatz erhöht. Die Luftkanäle 106 und 107 sind bevorzugt so ausgebildet, dass sie leicht geöffnet oder zur Seite geschoben werden können, um von dem Innenraum des Spinners 102 aus einen Zugang in einen Innenraum der Rotomabe 101 zu ermöglichen.

In Fig. 1 ist zu erkennen, dass zur Eintrittsöffnung hin die Querschnittsfläche sich vergrößert. Hierdurch wird der Lufteintritt in den Innenraum erleichtert. Zudem wird etwa eingetretene Feuchtigkeit durch die Zentrifugalkraft von der Eintrittsöffnung fortgeleitet, ebenso durch die Schrägung 109 des Bodenelements. Ebenfalls in Fig. 1 ist zu erkennen, dass die Wand 116 des Aufsatzes 104 nach innen geneigt ist, so dass für die Luftströmung 112 ein breiterer Eintritt in den Luftkanal vorhanden ist.

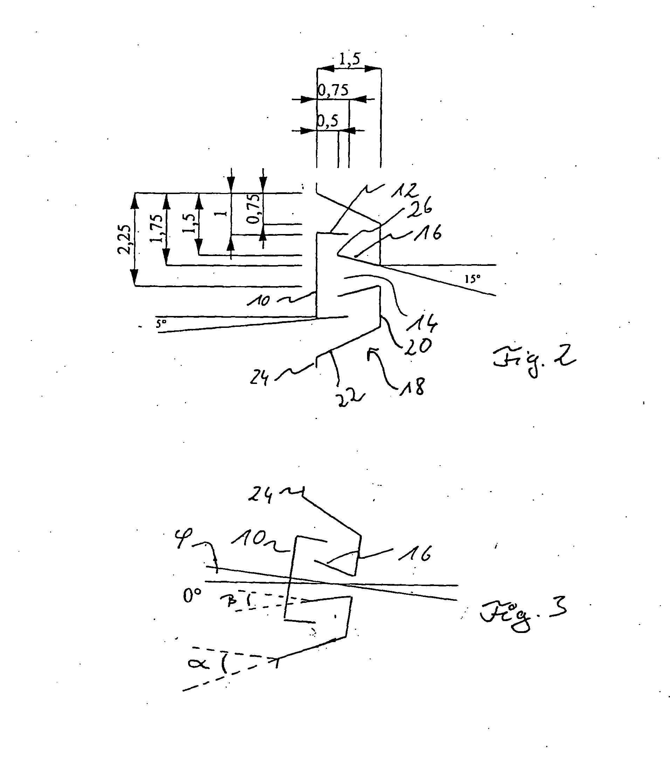

Fig. 2 zeigt den geometrischen Aufbau des Belüftungssystems. Das napfförmige Element besitzt eine Kreisform. Die Seitenwand 12 ist um ungefähr 5° nach innen geneigt. Das napfförmige Element 10 ist vor einer Eintrittsöffnung 14 eines Stutzens 16 angeordnet. Die Stutzenwand 16 ist konstant in einem Winkel von ungefähr 15° gegenüber der Mittelachse nach außen geöffnet, so dass insgesamt der Stutzen 16 die Form eines Kegelstumpfs besitzt. Der Stutzen 16 ist in einem Wandelement 18 angeordnet, das in einer Vertiefung ein Bodenelement 20 besitzt. Der Stutzen 16 steht zentral auf dem Grund 20 der Vertiefung. An den Grund angrenzend sind Seitenwände 22 vorgesehen, die ebenfalls gegenüber der Horizontalen geneigt sind. Die Seitenwände 22 gehen in einen Bereich 24 über, der in Fig. 2 lediglich im Ansatz dargestellt ist.

Zur Dimensionierung von Aufsatz 10 und Vertiefung haben sich eine Reihe von Verhältnissen als besonders vorteilhaft herausgestellt. Als besonders vorteilhaft bei der Dimensionierung hat sich herausgestellt, die Abmessungen so zu wählen, dass der Luftstrom entlang dem Strömungsweg einen im wesentlichen gleich groß bleibenden Querschnitt besitzt. Der Durchtrittskanal besitzt also im wesentlichen einen konstanten Querschnitt für die Luftströmung. Im folgenden sei der Abstand zwischen der Seitenwand 12 des Napfes und der Seitenwand 22 im Bereich des Lufteintritts mit der Größe 1 definiert. Der entsprechende Abstand ist in Fig. 2 eingezeichnet. Ausgehend von dieser Bezugsgröße hat es sich als vorteilhaft herausgestellt, wenn die Seitenwand 22 eine Steigung besitzt, derart, dass sie bezogen auf die durch den Grund 20 der Vertiefung verlaufende Ebene eine Breite von 0,75 besitzt. Der Abstand zwischen freier Kante 26 des Stutzens 16 und Übergang von Wandelement zu Seitenwand 22 ergibt sich dann genau als die doppelte Breite der Seitenwand 22. Der Stutzen 16 besitzt einen Öffnungswinkel in dem Beispiel von ungefähr 15°, wobei der Stutzen 16 sich im Durchmesser von 1,0 auf 0,5 verringert. Auch in axialer Richtung haben sich bestimmte Verhältnisse als besonders vorteilhaft herausgestellt. Die Ausdehnung der Vertiefung in axialer Richtung beträgt 1,5, wobei die Abdeckung 10 ungefähr mit halber Tiefe eintaucht. Der Stutzen 16 steht ungefähr um eine Längeneinheit vor, so dass sich ein Überlapp von Seitenwand 12 und Stutzen 16 in axialer Richtung von 0,25 ergibt.

Fig. 3 zeigt die Neigung, auch als tilt bezeichnet, gegenüber der Horizontalen. Da bei modernen Windenergieanlagen häufig Triebstrang und Nabe leicht nach hinten geneigt sind, werden der Stutzen 16 und die Abdeckung 10 um denselben Winkel ϕ geneigt. Der Winkel φ beträgt meist zwischen 3° und 7°, bevorzugt wird ein tilt-Winkel von 5° gewählt. Die Begrenzung der Öffnung ist auch bei einem tilt so bemessen, dass Wasser abgewiesen wird und ablaufen kann. Die Neigung des Stutzens 16 ist in Fig. 3 mit dem Winkel β bezeichnet, während die Neigung der Seitenwand 22 mit dem Winkel α gekennzeichnet wurde. Um ein Ablaufen sicherzustellen, gilt: α > φ und β > φ

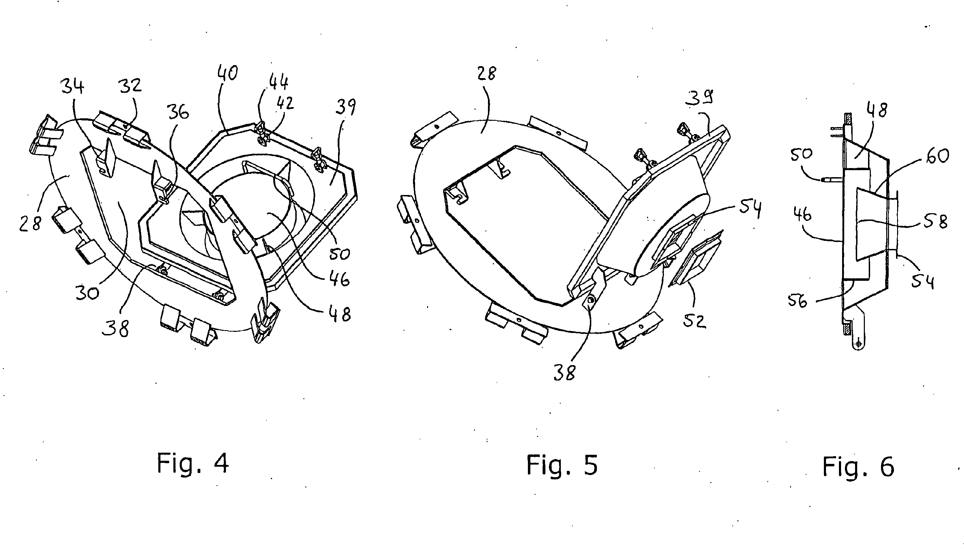

Fig. 4 zeigt eine perspektivische Ansicht des erfindungsgemäßen Lüftungssystems, das in eine Einstiegsluke für die Rotornabe integriert ist. In der Regel befindet sich die Einstiegsluke in der Spitze der Rotomabe, bzw. deren Gehäuse. Die Einstiegsluke besitzt eine Wandplatte 28, mit einer zentralen Öffnung 30 und Befestigungselementen 32 entlang dem Umfang. Auf der Außenseite der Wandplatte 28 sind L-förmige Verriegelungsvorsprünge 34 mit einer schlitzförmigen Ausnehmung 36 angebracht. An entsprechenden Vorsprüngen 38 ist eine Luke 39 mit einem Rahmen 40 schwenkbar angelenkt. Die Luke 39 öffnet nach innen. Über zwei vorstehende Stifte 42 mit Verriegelungsköpfen 44 kann der Lukenrahmen 40 in den Ausnehmungen 36 befestigt werden.

Zentral in der Luke ist der Napf 46 vorgesehen, der durch drei Stege 48 in einer Vertiefung gehalten ist. Zur besseren Handhabung der Luke ist im Bereich der Befestigungsstifte 42 ein Handgriff 50 vorgesehen.

Fig. 5 zeigt den Lukendeckel 39 von innen, wobei ein viereckiger Rahmen 54 des Lufteintritts deutlich sichtbar ist. Auf den Rahmen 54 kann ein Filter 52 angesetzt werden, der zusätzlich den Eintritt von Schmutzteilchen und Wasser verhindert.

Fig. 6 zeigt einen Querschnitt, in dem deutlich zu erkennen ist, dass die Seitenwände 56 des aufgesetzten Napfelements 46 über die Eintrittsöffnung 58 des Stutzens 60 hinausragen.

## Patentansprüche

1. Windenergieanlage mit einer Belüftungseinrichtung für eine Rotornabe, mit:
- einem napfförmigen Element (10; 46; 104), das einen Grund und eine umlaufende Seitenwand (12; 56; 116) besitzt, und
- einem rohrförmigen Stutzen (16; 60; 108), der in einen Innenraum der Rotornabe weist,
**dadurch gekennzeichnet, dass**
das napfförmige Element derart vor einer Eintrittsöffnung des Stutzens gehalten ist, dass die Eintrittsöffnung innerhalb des napfförmigen Elements angeordnet ist.

2. Windenergieanlage nach Anspruch 1, **dadurch gekennzeichnet, dass** der Stutzen im wesentlichen in der Verlängerung der Rotationsachse der Nabe angeordnet ist.

3. Windenergieanlage nach Anspruch 1 und 2, **dadurch gekennzeichnet, dass** die Wand des Stutzens nach außen geneigt ist.

4. Windenergieanlage nach einem der Ansprüche 1 bis 3, **dadurch gekennzeichnet, dass** das napfförmige Elemente einen Innendurchmesser besitzt, der größer als der Außendurchmesser des Stutzens ist.

5. Windenergieanlage nach einem der Ansprüche 1. bis 4, **dadurch gekennzeichnet, dass** zusätzlich ein Wandelement (103, 18) vorgesehen ist, das eine Vertiefung mit einer zentralen Öffnung besitzt, auf die der Stutzen aufgesetzt ist oder durch die der Stutzen hindurchreicht.

6. Windenergieanlage nach Anspruch 5, **dadurch gekennzeichnet, dass** das napfförmige Element in der Vertiefung gehalten ist.

7. Windenergieanlage nach Anspruch 5 oder 6, **dadurch gekennzeichnet, dass** das Wandelement außerhalb der Vertiefung eben ausgebildet ist.

8. Windenergieanlage nach Anspruch 7, **dadurch gekennzeichnet, dass** der Grund des napfförmigen Elements in einer Höhe mit dem Wandelement liegt.

9. Windenergieanlage nach einem der Ansprüche 5 bis 8, **dadurch gekennzeichnet, dass** die Vertiefung derart angeordnet und ausgebildet ist, dass Wasser über Wände der Vertiefung abfließen kann.

10. Windenergieanlage nach einem der Ansprüche 5 bis 9, **dadurch gekennzeichnet, dass** eine von der Luft durchströmte Fläche zwischen der Wand der Vertiefung und dem napfförmigen Element, zwischen dem Wandelement und dem napfförmigen Element, zwischen dem napfförmigen Element und dem Stutzen sowie des Stutzens an der jeweils engsten Stelle im wesentlichen gleich groß ist.

11. Windenergieanlage nach einem der Ansprüche 5 bis 10, **dadurch gekennzeichnet, dass** das Wandelement über Arme an einem schwenkbar gelagerten Rahmen befestigt ist.

12. Windenergieanlage nach Anspruch 11, **dadurch gekennzeichnet, dass** der Rahmen und/oder das Wandelement mit Befestigungsmitteln versehen ist, um eine zentrale Lukenöffnung (30) zu verschließen.

13. Windenergieanlage nach einem der Ansprüche 5 bis 12, **dadurch gekenntzeichnet, dass** der Rand des Wandelements (105) entlang mindestens einer umlaufenden Linie abgebogen ist.

14. Windenergieanlage nach Anspruch 13, **dadurch gekennzeichnet, dass** der Stutzen (108) in den Innenraum der Rotornabe hineinreicht und ein oder mehrere elastische Schläuche (106) an das Stutzenende angesetzt sind.

15. Windenergieanlage nach Anspruch 13 oder 14, **dadurch gekennzeichnet, dass** das Wandelement in seinem Randbereich beabstandet von einer Ummantelung der Rotornabe derart gehalten ist, dass zwischen Wandelement und Ummantelung sich ein Austrittskanal bildet.

## Claims

1. Wind energy plant with an aeration equipment for a rotor hub, with:
- a cup-shaped element (10; 46; 104), which has a bottom and a circumferential side wall (12; 56; 116), and
- a pipe-shaped connection piece (16; 60; 108), directed into an inner space of the rotor hub,
**characterized in that**
- the cup-shaped element is kept in front of an entrance opening of the connection piece such that the entrance opening is arranged in the interior of the cup-shaped element.

2. Wind energy plant according to claim 1, **characterised in that** the connection piece is essentially arranged in the extension of the rotational axis of the hub.

3. Wind energy plant according to claim 1 and 2, **characterised in that** the wall of the connection piece is inclined towards the outside.

4. Wind energy plant according to any one of claims 1 to 3, **characterised in that** the cup-shaped element has an inside diameter which is greater than the outside diameter of the connection piece.

5. Wind energy plant according to any one of claims 1 to 4, **characterised in that** a wall element (105, 18) is additionally provided, which has a deepening with a central opening onto which the connection piece is set up or through which the connection piece extends through.

6. Wind energy plant according to claim 5, **characterised in that** the cup-shaped element is held in the deepening.

7. Wind energy plant according to claim 5 or 6, **characterised in that** the wall element is formed as being planar outside of the deepening.

8. Wind energy plant according to claim 7, **characterised in that** the bottom of the cup-shaped element is at equal height with the wall element.

9. Wind energy plant according to any one of claims 5 to 8, **characterised in that** the deepening is arranged and formed such that water can flow off via walls of the deepening.

10. Wind energy plant according to any one of claims 5 to 9, **characterised in that** a surface through which the air flows is essentially of equal size between the wall of the deepening and the cup-shaped element, between the wall element and the cup-shaped element, between the cup-shaped element and the connection piece, as well as the connection piece at its respective narrowest position.

11. Wind energy plant according to any one of claims 5 to 10, **characterised in that** the wall element is attached to a swingably mounted frame via arms.

12. Wind energy plant according to claim 11, **characterised in that** the frame and/or the wall element is provided with fixation means, in order to close a central hatch opening (30).

13. Wind energy plant according to any one of claims 5 to 12, **characterised in that** the edge of the wall element (105) is bent off along at least one circumferential line.

14. Wind energy plant according to claim 13, **characterised in that** the connection piece (108) extends into the inner space of the rotor hub, and that one or several elastic tubes (106) are mounted on the end of the connection piece.

15. Wind energy plant according to claim 13 or 14, **characterised in that** on its edge portion, the wall element is kept spaced apart from a casing of the rotor hub, such that an outlet channel is formed between wall element and casing.

## Revendications

1. Éolienne avec un dispositif de ventilation pour un moyeu de rotor, avec
• un élément en forme de cuvette (10; 46; 104) qui possède un fond et une paroi latérale circonférentielle (12; 56; 116), et
• un manchon tubulaire (16; 60; 108) qui vise vers un espace intérieur du moyeu de rotor,
• **caractérisé en ce que** l'élément en forme de cuvette est tenu avant une ouverture d'entrée de façon que l'ouverture d'entrée est disposée dans l'intérieur de l'élément en forme de cuvette.

2. Éolienne selon la revendication 1, **caractérisé en ce que** le manchon est essentiellement disposé dans le prolongement de l'axe de rotation du moyeu.

3. Éolienne selon la revendication 1 et 2, **caractérisé en ce que** la paroi du manchon est inclinée vers l'extérieur.

4. Éolienne selon l'une quelconque des revendications 1 à 3, **caractérisé en ce que** l'élément en forme de cuvette possède un diamètre intérieur qui est plus grand que le diamètre extérieur du manchon.

5. Éolienne selon l'une quelconque des revendications 1 à 4, **caractérisé en ce que** un élément de paroi (105, 18) est pourvu en outre, qui possède un creusement avec une ouverture centrale sur laquelle le manchon est mis ou à travers laquelle le manchon s'étend.

6. Éolienne selon la revendication 5, **caractérisé en ce que** l'élément en forme de cuvette est tenu dans le creusement.

7. Éolienne selon la revendication 5 ou 6, **caractérisé en ce que** l'élément de paroi est formé plain au dehors du creusement.

8. Éolienne selon la revendication 7, **caractérisé en ce que** le fond de l'élément en forme de cuvette est situé sur le même niveau que l'élément de paroi.

9. Éolienne selon l'une quelconque des revendications 5 à 8, **caractérisé en ce que** le creusement est tellement disposé et formé que de l'eau peut se décharger à travers des parois du creusement.

10. Éolienne selon l'une quelconque des revendications 5 à 9, **caractérisé en ce que** une surface à travers laquelle passe l'air est essentiellement de la même taille dans la position la plus étroite respective entre la paroi du creusement et l'élément en forme de cuvette, entre l'élément de paroi et l'élément en forme de cuvette, entre l'élément en forme de cuvette et le manchon aussi bien que du manchon.

11. Éolienne selon l'une quelconque des revendications 5 à 10, **caractérisé en ce que** l'élément de paroi est fixé par des bras dans un cadre monté de façon pivotante.

12. Éolienne selon la revendication 11, **caractérisé en ce que** le cadre et/ou l'élément de paroi est pourvu avec des moyens de fixation afin de fermer une cale (30) centrale.

13. Éolienne selon l'une quelconque des revendications 5 à 13, **caractérisé en ce que** le bord de l'élément de paroi (105) est plié le long d'au moins une ligne circonférentielle.

14. Éolienne selon la revendication 13, **caractérisé en ce que** le manchon (108) s'étend dans l'intérieur du moyeu de rotor et un ou plusieurs tuyaux élastiques (106) sont mis sur l'extrémité du manchon.

15. Éolienne selon la revendication 13 ou 14, **caractérisé en ce que** dans sa zone de bord, l'élément de paroi est tenu dans un écart d'un revêtement du moyeu de rotor tellement que un canal de décharge se forme entre l'élément de paroi et le revêtement.
